Europäisches Patentamt

European Patent Office

Office européen des brevets

(19)

(11) Publication number: **0 356 727**
**A2**

(12) **EUROPEAN PATENT APPLICATION**

(21) Application number: **89114046.9**

(22) Date of filing: **29.07.89**

(51) Int. Cl.⁵: **G06F 15/70**

(30) Priority: **09.08.88 US 230215**

(43) Date of publication of application:
**07.03.90 Bulletin 90/10**

(84) Designated Contracting States:
**DE FR GB IT NL**

(71) Applicant: **SCHLUMBERGER TECHNOLOGIES INC**
**2702 Orchard Parkway PO Box 32070**
**San Jose, CA 95152(US)**

(72) Inventor: **Nishihara, Keith H.**
**1468 Richardson Avenue**
**Los Altos California 94022(US)**

(74) Representative: **Sparing - Röhl - Henseler**
**Patentanwälte**
**Rethelstrasse 123 Postfach 14 02 68 .**
**D-4000 Düsseldorf 1(DE)**

(54) **Symmetrie-based target position measurement.**

㊼ A target location technique using a target which is invariant to a particular symmetry transformation about a target symmetry point. The target is first projected onto an image plane, whereupon the target symmetry point will be mapped onto an image symmetry point. The target image and a symmetry transformed version thereof are then subjected to a correlation search to determine the location of the correlation peak, which gives the position of the target image symmetry point. Since the target is invariant under the symmetry operation, the correlation operation does not require a separate template to be stored. Prior to the correlation operation the image is preferably filtered to remove at least some higher spatial frequencies while leaving at least some lower spatial frequencies. In a preferred embodiment, the target consists of a set of random dots having the prescribed symmetry. The target symmetry is preferably invariance under point reflection through a symmetry point on the target (equivalent to a 180° rotation about the symmetry point). The filtering operation is preferably a binarized Laplacian of Gausian ("$\nabla^2 G$") convolution.

FIG_ 7

## SYMMETRY-BASED TARGET POSITION MEASUREMENT

### FIELD OF THE INVENTION

The present invention relates generally to position measurement, and more specifically to a system for precisely locating images of a target that has a certain symmetry built into it.

### BACKGROUND OF THE INVENTION

Applications requiring the accurate measurement of positions abound. Examples include robotic assembly, where the six-axis location and orientation of a manipulator's end effector must be known to high tolerances, and head mounted 3-D graphic display systems where the six-axis position and orientation of a display helmet must be known accurately to provide proper graphic responses to head motions.

One way of making these measurements is through the use of fiducial targets imprinted on the moving object and imaged by a set of cameras surrounding the object's space. The position, orientation, and scale of each fiducial in the camera images can be determined by correlating the image with a stored template of the fiducial. The actual location of the object can then be determined by triangulation based on the known camera positions and optical parameters.

When parameters such as orientation, image magnification, aspect ratio, or skew are not known, matching the image to the template in the image plane requires a search space of three or more dimensions (two image plane spatial coordinates and one or more other parameters), which can be very costly computationally. To cope with this, ways have to be found to reduce the dimensionality of the search space to something more reasonable. One approach is to use a very simple target such as a cross pattern which can be found more quickly by a search for straight edges.

There are, however, often advantages to using much more complex target patterns. One such technique uses a target (and template) consisting of a randomly generated dot pattern. The correlation in the image plane is carried out using the binarized Laplacian of Gaussian convolution of the image and the template. The technique has the advantage that it performs well in the presence of noise levels. However, the need to account for rotation and scaling remains.

### SUMMARY OF THE INVENTION

The present invention measures two-axis position with a fiducial pattern that defines its own template, thereby making the technique insensitive to rotation, scaling, and skew. Thus, the target center can be determined with only a two-dimensional search.

The invention contemplates using a target which is invariant to a particular symmetry transformation about a target symmetry point. The target is first projected onto an image plane, whereupon the target symmetry point will be mapped onto an image symmetry point. The target image and a symmetry transformed version thereof are then subjected to a correlation search to determine the location of the correlation peak, which gives the position of the target image symmetry point. Since the target is invariant under the symmetry operation, the correlation operation does not require a separate template to be stored.

Prior to the correlation operation the image is preferably filtered to remove at least some higher spatial frequencies while leaving at least some lower spatial frequencies. In a preferred embodiment, the target consists of a set of random dots having the prescribed symmetry. The target symmetry is preferably invariance under point reflection through a symmetry point on the target (equivalent to a 180° rotation about the symmetry point). The filtering operation is preferably a binarized Laplacian of Gaussian ("$\nabla^2 G$") convolution.

A further understanding of the nature and advantages of the present invention may be realized by reference to the remaining portions of the specification and the attached drawings.

### BRIEF DESCRIPTION OF THE DRAWINGS

Fig. 1 is an isometric view illustrating the general configuration of the imaging system;

Fig. 2A is a stylized view of a target having point reflection symmetry;

Fig. 2B is a stylized view of the target projected into the image plane;

Fig. 3A shows a random dot pattern suitable for use with the present invention;

Fig. 3B shows the result of subjecting the dot pattern of Fig. 3A to a Laplacian of a Gaussian convolution and using the sign;

Fig. 4 is a perspective view of the correlation surface for the filtered target image of Fig. 3B;

Figs. 5A and 5B correspond to Figs. 3A and 3B but show the effects of noise in the image of the dot pattern; and

Fig. 6 is a perspective view of the correlation surface for the noisy image;

Fig. 7 is a flow chart illustrating the overall correlation process;

Fig. 8 is a block diagram illustrating one technique for collecting pixel values for computing the Laplacian at video rates;

Fig. 9 is a block diagram illustrating one technique for obtaining the Laplacian of the pixel values collected in Fig. 13;

Fig. 10 is a block diagram of the basic computing element of one technique for obtaining a Gaussian convolution at video rates;

Fig. 11 illustrates the repeated application of the technique of Fig. 10 to compute a 7x7 two-dimensional Gaussian convolution of the Laplacian filtered signal from Figs. 9 and 11;

Fig. 12 is a block diagram illustrating the combining of the Laplacian with two 7x7 Gaussian elements to efficiently produce a 21x21 Gaussian of Laplacian convolution;

Fig. 13 is a block diagram of the correlator used to compare filtered images; and

Fig. 14 is a plot showing experimental results.

## DESCRIPTION OF THE PREFERRED EMBODIMENT

### A. Overview

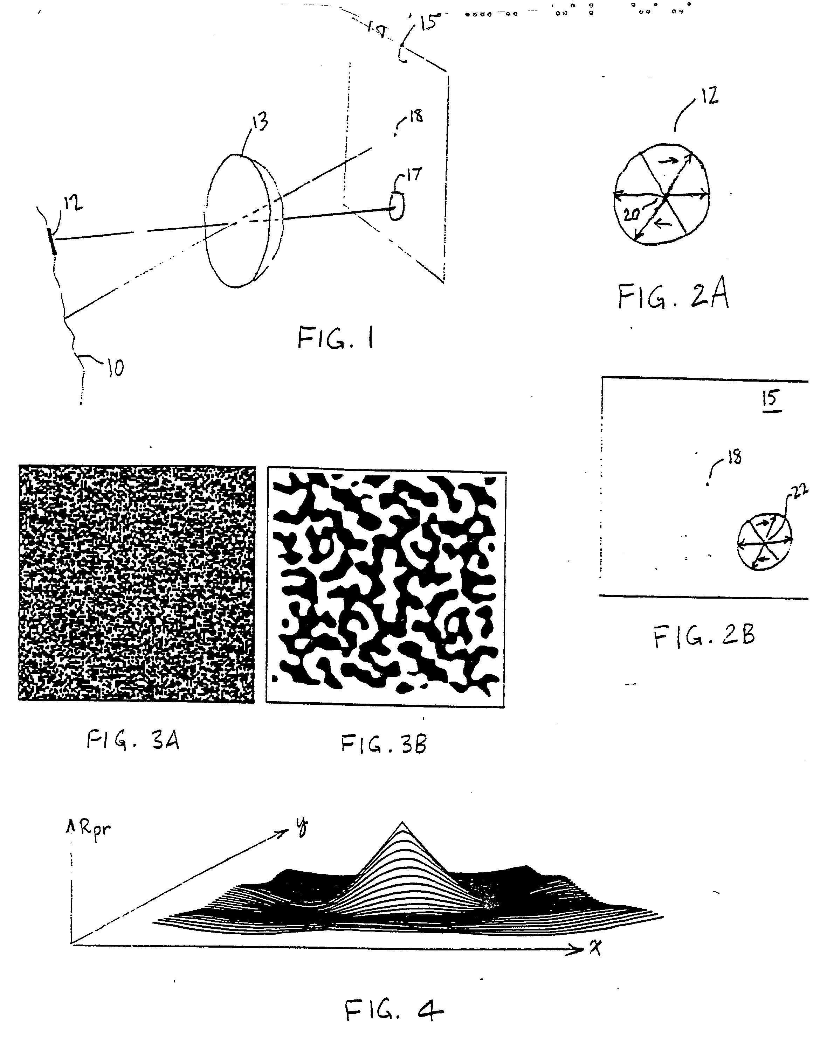

Fig. 1 is an isometric view of a portion of an imaging system, the purpose of which is to track the location of an object 10 on which is imprinted a target 12. Target 12 is imaged by a lens 13 on an image plane 15 to form a target image 17. Image plane 15 includes a fixed reference point 18, which may, by way of example, be the intersection of the optic axis of lens 13 with the image plane.

Fig. 2A is a stylized view of target 12 which is characterized by a particular symmetry, in this case invariance under point reflection through a target symmetry point 20. Equivalently, the symmetry can be expressed as invariance under $180°$ rotation about target symmetry point 20. Although target 12 is shown as having a simple geometric shape, the preferred embodiment utilizes a very different and much more complex target, as will be discussed below.

Fig. 2B shows the projection of target 12 in image plane 15, with target symmetry point 20 mapping onto an image symmetry point 22. The ultimate purpose is to determine the horizontal and vertical coordinates of target symmetry point 20 relative to fixed reference point 18. Target symmetry point 20 is located by correlating the target image with a transformed version thereof. The technique has the advantage of not requiring the use of a stored template, and thus is immune to such image transformations as rotation, scaling, linear compression, and skew.

The correlation search for the symmetry point entails, for each point in the image, evaluating the overlap integral (or cross correlation) between the target image and a version of the target image that has been reflected through that point. In principle, there is no need to generate and store the reflected image, however, since the values can be obtained from the target image. In a preferred hardware implementation, however, separate copies of the target image are stored in two memories so as to allow greater speed. Therefore, assuming the symmetry point in the target image to have coordinates (x,y), the cross correlation for an image having an intensity distribution I(x,y) is given by:

$$R_{pr}(x,y) = \int_W I(x-u,y-v)I(x+u,y+v)\,du\,dv \qquad (1)$$

where the integration is over all points (u,v) in the correlation window W which is centered on (x,y). Inspection of the integral reveals that the value will be maximum when (x,y) is the symmetry point $(x_p,y_p)$, since $I(x_p-u,y_p-v)$ will equal $I(x_p-u,y_p+u)$ and therefore reinforce at each point in the correlation window.

3

## B. Specific Target and Properties Correlation Function

Fig. 3A shows a preferred embodiment of the target to be used with the present invention. The target consists of a square pixel array containing random dots having point reflection symmetry. This example is constructed by using a random number generator to decide whether or not to mark a dot at each pixel position in the left-hand side of the square target. The positions on the right half are determined by reflecting the pixels on the left-hand side through the symmetry point (which is the center of the target in this case). Thus the pixels at the lower left and upper right corners are the same, and the pixel value one pixel above the center pixel is the same as the pixel one position below the center.

Fig. 3B shows the result of a filtering operation carried out on the pattern of Fig. 3A. More particularly, Fig. 3B shows the binary pattern obtained by taking the sign of the Laplacian of Gaussian ("$\nabla^2 G$") convolution of the pattern of Fig. 3A using an operator with a positive center diameter eight times the dot size used in the pattern of Fig. 3A. While the point reflection symmetry is not apparent in the pattern of Fig. 3A, it is easy to see in the pattern of Fig. 3B because the coarse structure of the pattern is accentuated by the $\nabla^2 G$ sign representation.

Fig. 4 is a perspective view of the correlation surface $R_{pr}$ for the pattern of Fig. 3B. The correlation window size was approximately two-thirds the size of the pattern of Fig. 3B and the correlation was calculated at each half pixel position over a 24x24 pixel area centered on the mid-point of the pattern of Fig. 3B.

The shape of the correlation surface is the same as the shape of the standard autocorrelation function of the sign of $\nabla^2 G$ filtered white noise. Because Equation 1 is applied to an image I(x,y) which has the properties that I(x,y) equals I(-x,-y), assuming without loss of generality that the point reflection symmetry center is at the origin.

Plugging this identity into Equation 1 and setting W to the entire u-v plane, yields:

$$R_{pr}(x,y) = \int I(-x+u,-y+v)I(x+u,y+v)dudv \qquad (2)$$

$$= \int I(u,v)I(2x+u,2y+v)dudv \qquad (3)$$

$$= R(2x,2y) \qquad (4)$$

where R(x,y) is the standard autocorrelation function of I.

For discrete pixel arrays, $R_{pr}$ can be measured at half pixel resolution without need for interpolation. This is because the point reflection symmetry center can be on a pixel or between pixels and still allow pixel to pixel alignments in the integral. Thus the factor of 2 scale factors in Equation 4 are cancelled by this factor of two increase in position resolution leaving a correlation surface measurable to the same pixel resolution.

The standard autocorrelation function of the sign of $\nabla^2 G$, filtered white noise (which is approximately correct for a random dot pattern like that shown in Fig. 3A) is:

$$R_s(\tau) = (2/\pi)\sin^{-1}(R_c(\tau)/R_c(0)) \qquad (5)$$

where $R_c(\tau)$ is the autocorrelation function of the $\nabla^2 G$ convolution prior to binarization. For a white noise image, it has the form:

$$R_c(\tau) = k(1 - 4\tau^2/w^2 + 2\tau^4/W^4)\exp(-2\tau^2/w^2) \qquad (6)$$

where k is a constant and w is the diameter of the center of the $\nabla^2 G$ operator which can be written in polar coordinates as:

$$\nabla^2 G = (1 - 4\tau^2/w^2)\exp(-4\tau^2/w^2) \qquad (7)$$

The standard autocorrelation function for the sign of an $\nabla^2 G$ filtered image has a number of important properties which are shared by the point reflection correlation function. In the absence of noise, the correlation peak has a height normalized to 1 (since binary patterns are being correlated). There is a close to linear roll-off with distance from the peak, and the width of the peak is proportional to the size of the $\nabla^2 G$ operator used to filter the image. Most important of all, this correlation is primarily sensitive to image information at locations where there is a local maximum in the rate of change at a scale determined by the size of the $\nabla^2 G$ operator. For random dot patterns, this corresponds closely with the clustering structure at a scale approximately the size of the center diameter (w) of the $\nabla^2 G$ operator.

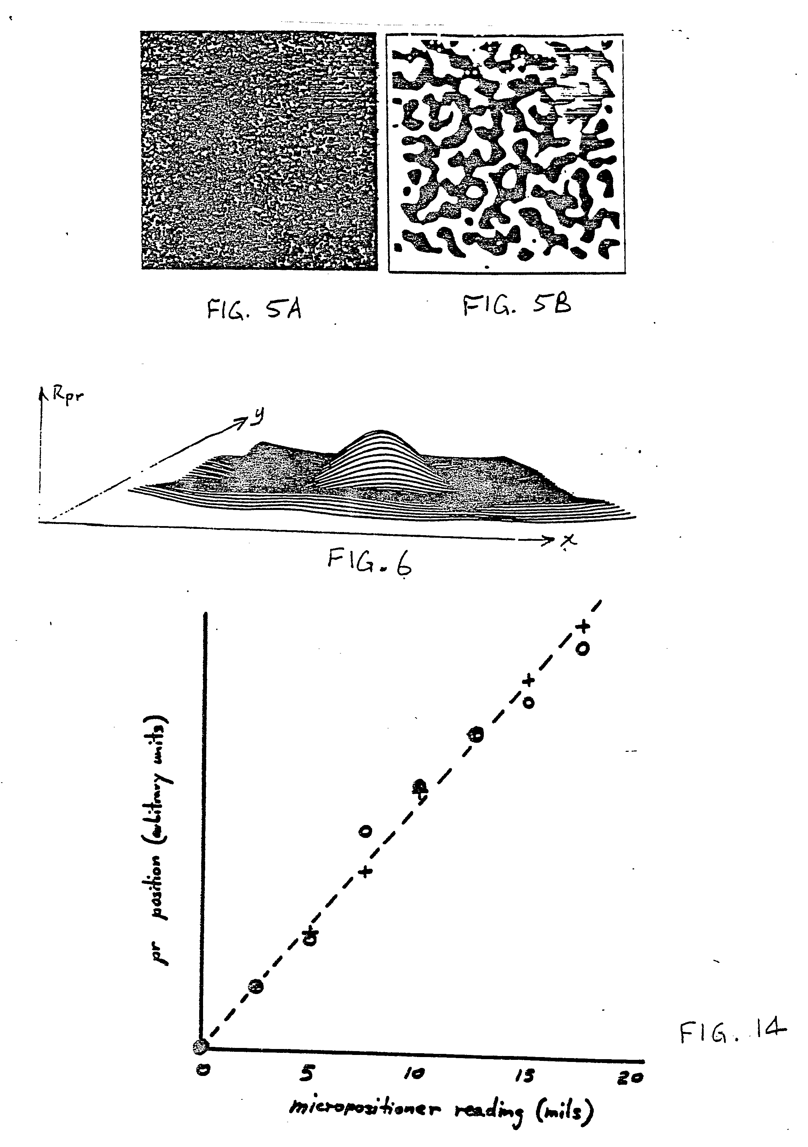

Fig. 5A is another random dot target having point reflection symmetry, but further having 25% of its dots corrupted by random noise to simulate a noisy image. The sign of the $\nabla^2 G$ convolution of this pattern is shown in Fig. 5B. The point reflection symmetry is less apparent here because of the noise, but there is still a significant point reflection correlation.

Fig. 6 shows the correlation surface for the noise-corrupted image. The peak height is only about $(1-.25)^2 = .56$ and is much more rounded. It can still be located reliably because the correlation surface stays close to zero in regions away from the peak.

The actual peak location at a sub-pixel level may be interpolated according to the following set of

equations. The height $\phi$ of the point reflection correlation surfaces shown in Figs. 4 and 6 can be approximated near the peak location $(x_p, Y_p)$ by an expression of the form: $\phi(x,y) = 1 - [a(x-x_p)^2 + b(y-y_p)^2 + c]^{\frac{1}{2}}$ (8)
where a and b are related to the aspect ratio of the correlation peak's footprint, and c depends on the noise level. The values of a and b are normally similar, but may differ due to effects such as non-square pixels.

This simplified peak model can be used to solve for the peak position in terms of a relatively small number of correlation value measurements.

$$\psi(x,y)^2 = (\phi(x,y)-1)^2 \qquad (9)$$
$$= a(x-x_p)^2 + b(y-y_p)^2 + c \qquad (10)$$

A one-dimensional slice through this surface along the x axis has the form:

$$\psi(x,0)^2 = a(x-x_p)^2 + by_p{}^2 + c \qquad (11)$$

This function can be measured at three points along this curve to give a solution for $x_p$. For example using the points (-1,0), (0,0), and (1,0) yields the equations:

$$\psi(-1,0)^2 = a(-1-x_p)^2 + by_p{}^2 + c \qquad (12)$$
$$\psi(0,0)^2 = ax_p{}^2 + by_p{}^2 + c \qquad (13)$$
$$\psi(1,0)^2 = a(1-x_p)^2 + by_p{}^2 + c \qquad (14)$$

This yields:

$$x_p = \frac{\psi(-1,0)^2 - \psi(1,0)^2}{2\psi(-1,0)^2 - 4\psi(0,0)^2 + 2\psi(1,0)^2} \quad \ldots (15)$$

Similarly, measuring the correlation at two additional points yields:

$$y_p = \frac{\psi(0,-1)^2 - \psi(0,1)^2}{2\psi(0,-1)^2 - 4\psi(0,0)^2 + 2\psi(0,1)^2} \quad \ldots (16)$$

Thus the peak position $(x_p, y_p)$ can be estimated using correlation measurements centered on five neighboring pixel locations.

C. Apparatus for Carrying Out the Method

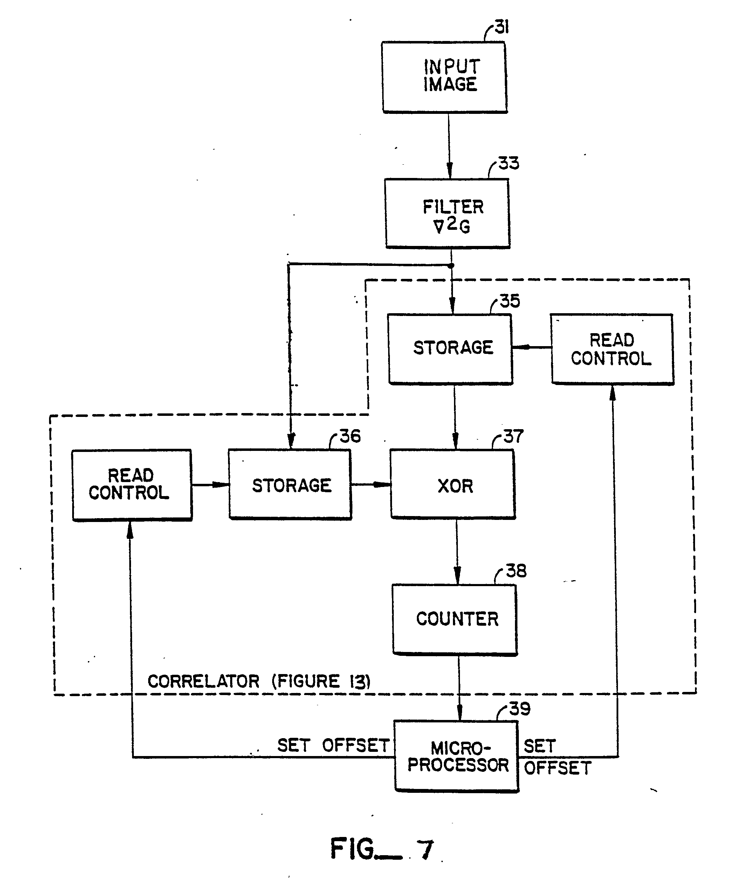

Fig. 7 is a flowchart illustrating the overall correlation process. A digitized image 31 is supplied to the process. The image is filtered to attenuate higher spatial frequencies while preserving some of the lower spatial frequencies. This step is represented by block 33. The apparatus for performing the filtering is described below. The results of the filtered data are stored in a memory 35 and in a memory 36. Under external control, typically from a microprocessor 39, the contents of the two memories 35 and 36 are dumped to an exclusive OR gate 37. The exclusive OR gate, 37, in effect, counts the "hits" to determine the cross-correlation (see Equation 1) image 31. By supplying a different offset to one of the memories 35 or 36 than to the other, the digital representations of the images may be shifted with respect to each other for comparison. Counter 38 will count the hits for each shift, in effect, enabling the microprocessor 39 to measure selected points on the peaked correlation surface. Once enough measurements have been made, the location of the peak can be estimated.

To realize the invention in a practical or commercial context, the images acquired or retrieved must be processed much more rapidly than a general purpose digital computer would permit. Described below is special purpose hardware for performing the filtering functions at a sufficiently high rate to enable target position measurements to be made at video rates.

For the sake of explanation, assume that in the preferred embodiment, a video camera image with a resolution of approximately 500 by 500 pixels is digitized by an A/D converter to produce a digital video stream.

The first step is to apply the Laplacian function to the video stream. Although either the Laplacian or Gaussian functions could be applied first without affecting the result, it has been determined that application of the Laplacian function first provides certain advantages. In particular, by applying the Laplacian function

5

first, the processed video signal is centered on zero and then smoothed. This allows better use of n-bit integer resolution because the n-bit numbers are not required to characterize as wide a range of signal as would exist were the Gaussian function applied first. Applying the Laplacian first reduces the amount of scaling required through the Gaussian pipeline operation to keep the values in range.

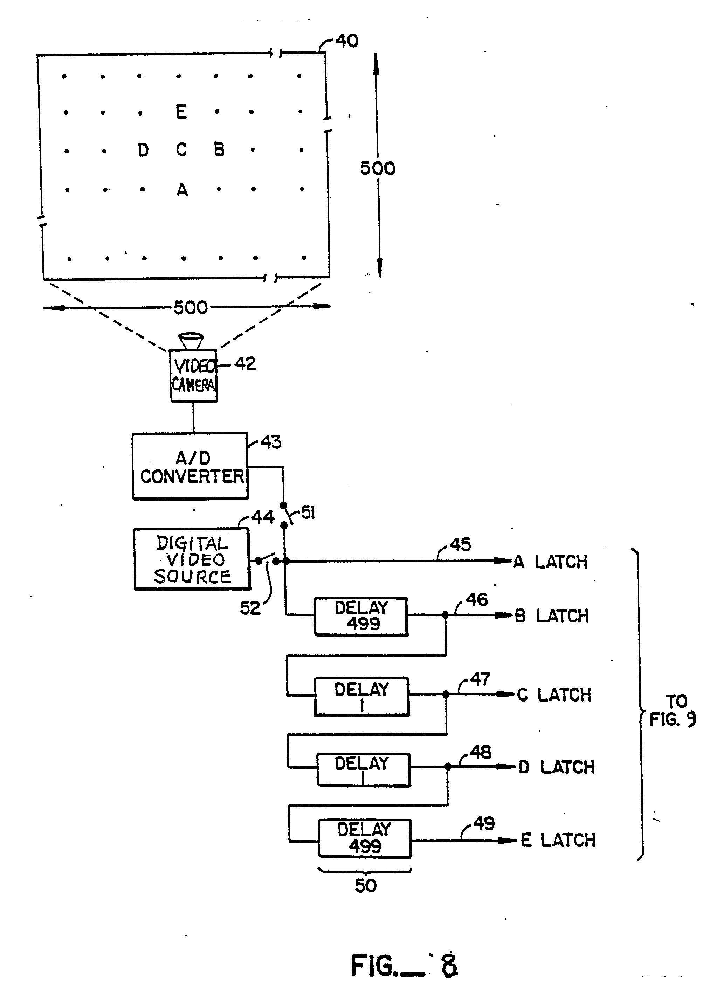

The 500-pixel square image 40 is shown at the top of Fig. 8. If the Laplacian function is to be applied to pixel C, then the 8-bit binary value for each of pixels A-E must be retrieved and appropriately weighted. The apparatus of Fig. 8 illustrates one technique for retrieving the desired pixels. As the desired pattern is acquired as a noninterlaced video raster scan from a video camera 42 and A/D converter 43, at some given instant pixel A will be supplied on a line 45. At that point in time, a line 46 will carry B, the value received 499 pixels earlier. Similarly, lines 47, 48, and 49 will hold pixels C, D, and E, respectively, which were received 500, 501, and 1000 pixels earlier than A. Thus, this configuration produces five simultaneous samples making a cross pattern off of the image as shown at the top of Fig. 8. Note that when the next pixel arrives at line 45, the entire cross pattern of samples will move one pixel to the right on the image following the raster scan. As the value for each pixel is retrieved, it may be latched before being supplied to subsequent processing. The delay elements 50 shown in Fig. 8 may comprise any known delay element, for example, a shift register or a random access memory. Switches 51 and 52 control whether the pixels latched are from video camera 42 or from some other digital video source 44.

Fig. 9 illustrates apparatus for obtaining the Laplacian of the acquired pixel values. It has been determined that a satisfactory approximation to the Laplacian function at a given pixel location is to apply a weight of 4 to that particular pixel and a weight of -1 to the pixels above, below, to the left, and to the right of the specified pixel. As shown in Fig. 9, the pixel values for pixels A and B are supplied to an adder 60, while those for pixels D and E are supplied to an adder 61. As a result, adder 60 supplies an output signal A + B on a line 62, while adder 61 supplies an output signal D + E on a line 63. Another adder 64 connected to receive the signals on a line 62 and 63 then supplies an output signal on a line 65 indicative of the sum of all of pixels A, B, D, and E.

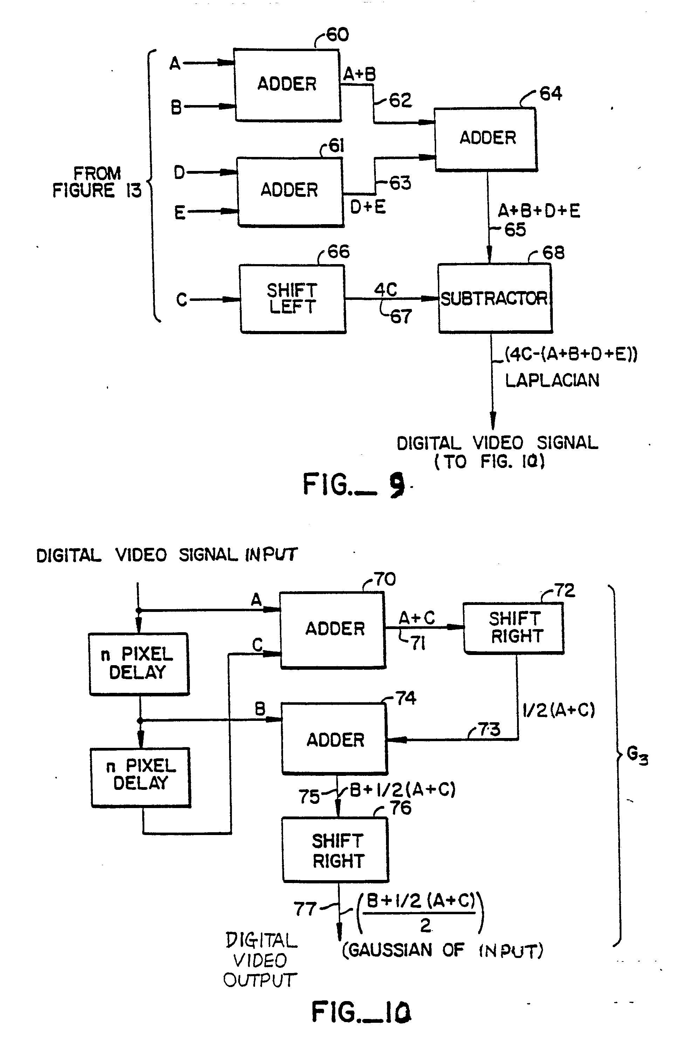

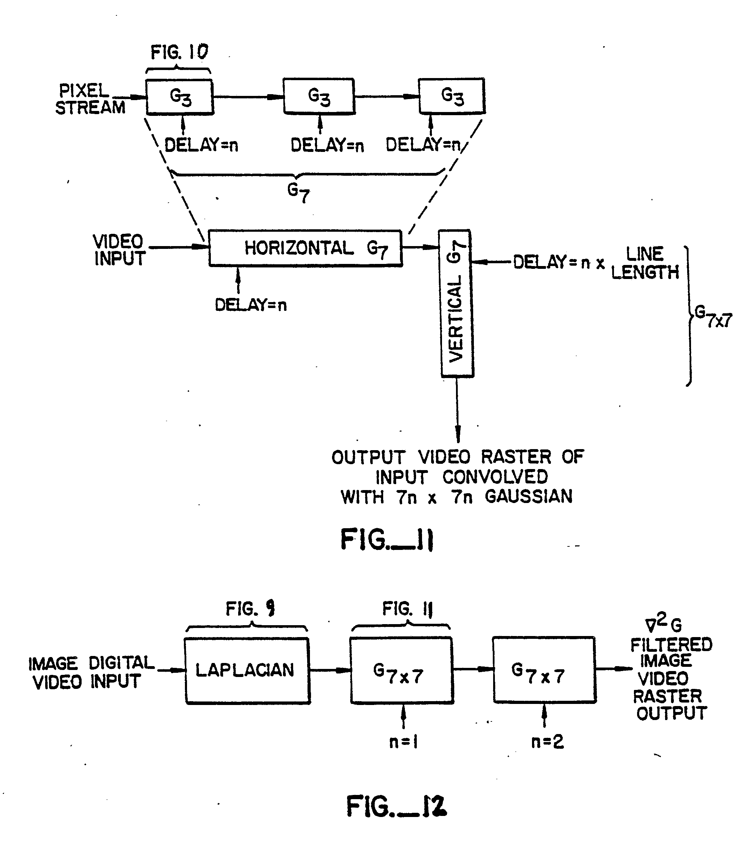

The pixel value for pixel C is supplied to a shifter 66. By shifting the pixel value two places left, the value is effectively multiplied by four, and the results supplied on a line 67 to a subtractor 68. Subtractor 68 combines the sum supplied on line 65 with the quadruply-weighted value on line 67 to achieve a new value which approximates the Laplacian at pixel C of the input image. Thus the output of subtractor 68 carries a video raster signal of the Laplacian of the input image. This signal is fed to the next stable of processing, the Gaussian convolver. The manner by which the Gaussian convolution is applied is shown in Figs. 10 and 11.

The preferred embodiment uses the fact that a two-dimensional Gaussian convolution can be decomposed into a composition of one-dimensional Gaussian convolutions. To see this, note that the two-dimensional Gaussian can be written as the product of two one-dimensional Gaussians:

$$G(x,y) = \exp(-(x^2 + y^2)/\sigma^2) \qquad (17)$$
$$= \exp(-x^2/\sigma^2)\exp(-y^2/\sigma^2) \qquad (18)$$
$$= G(x)G(y) \qquad (19)$$

Thus, a two-dimensional Gaussian convolution is achieved by means of two cascaded one-dimensional convolutions which are much less expensive computationally to accomplish. The one-dimensional Gaussian operator may be approximated by a binomial distribution in one dimension. For example, the seven point binomial distribution (1, 6, 15, 20, 15, 6, 1) is quite close to the Gaussian. The preferred embodiment employs a three-point binomial operator with weights of (1, 2, 1) three times to produce the effect of a convolution with the 7-point binomial distribution. This choice allows a particularly efficient hardware implementation. This is illustrated in Fig. 11.

Fig. 10 illustrates the operation of the three-point mechanism, $G_3$. A digital raster input is applied to the input of two serially connected delay elements. These delay elements will both introduce a delay of n pixels between their input and output terminals, where n = 1 or 2 pixels for horizontal convolutions and n = the image line length or twice the image line length for vertical convolutions. These delay elements provide three simultaneous values A, B, and C separated by n pixels from each other in the image. A and C are applied to an adder 70 and the sum supplied on a line 71 to a shifter 72. Shifter 72 shifts the sum of A + C one place to the right, in effect dividing it by two. The output signal on a line 73 is supplied to an adder 74 in conjunction with the binary value for pixel B. Adder 74 thereby provides on a line 75 a value equal to the sum of the value of pixel B plus one-half the sum of values of pixels A and C. To maintain correct amplitude, this result is shifted right one place by a shifter 76, and the result supplied on a line 77. The result on line 77 is the input signal smoothed by a 3 point binomial distribution. To obtain a finer approximation to the Gaussian, the procedure of Fig. 10 may be repeated more than once as shown in Fig. 11.

Fig. 11 illustrates how a pipeline of three three-point Gaussian convolution elements $G_3$ of Fig. 10 is configured. This device convolves the input video stream with a 7-point binomial approximation to a one-dimensional Gaussian $G_7$. If the delay elements are set to produce a delay of one pixel, this will be a horizontal Gaussian convolution. If the delay elements are set to the line length of the image this will be a vertical convolution.

Convolving with a 7-point normalized Gaussian operator reduces the amplitude of a typical Laplacian filtered image by about a factor of two. The preferred embodiment, therefore, needs to shift one less bit right for each 7-point Gaussian operator. In other words, the amplitude of the output signal is boosted by a factor of two after application of each 7-point Gaussian operator. In terms of the hardware required, this gains one bit of precision with each subsequent 7-point Gaussian operator. Thus, in a preferred system having four such operators, four bits are gained, or equivalently four bits are saved in the pipeline data width while obtaining the same precision in the final output. One of the $G_3$ operators of each $G_7$ operator does not include the normalization operation for the reasons discussed above. Accomplishing a 7-by-7 two-dimensional Gaussian convolution entails assembling two $G_7$ elements, one with delay set to do a horizontal convolution and the other with delay set for a vertical convolution.

The lower portion of Fig. 11 illustrates using a pipeline of two $G_7$ elements to produce a $G_{7x7}$ element. In practice, a larger Gaussian filter than the 7-by-7 operator described is required. Similar techniques as described above could be used to build arbitrarily large filters. However, there is a more efficient approach. After the application of the $G_{7x7}$ filter, the input signal has been low pass filtered sufficiently that a subsequent operator that samples only every other pixel will not suffer from aliasing problems. Thus a 14-by-14 Gaussian convolution can be approximated by the $G_{7x7}$ operator with its points spread out by increasing its horizontal delays from one to two pixels and its vertical delays from one line length to two line lengths.

Fig. 12 shows two $G_{7x7}$ elements used in this way to produce effectively a 21-by-21 Gaussian convolution operator in a video pipeline with the Laplacian operator at the start. The result is a $\nabla^2 G$ filtered image which may be supplied to suitable storage means, for example, a random access memory such as described in conjunction with blocks 35 and 36 of Fig. 7. Because only the sign of the result is saved, the filtered image will be a binary one, having the appearance, for example, of Figs. 3B or 5B.

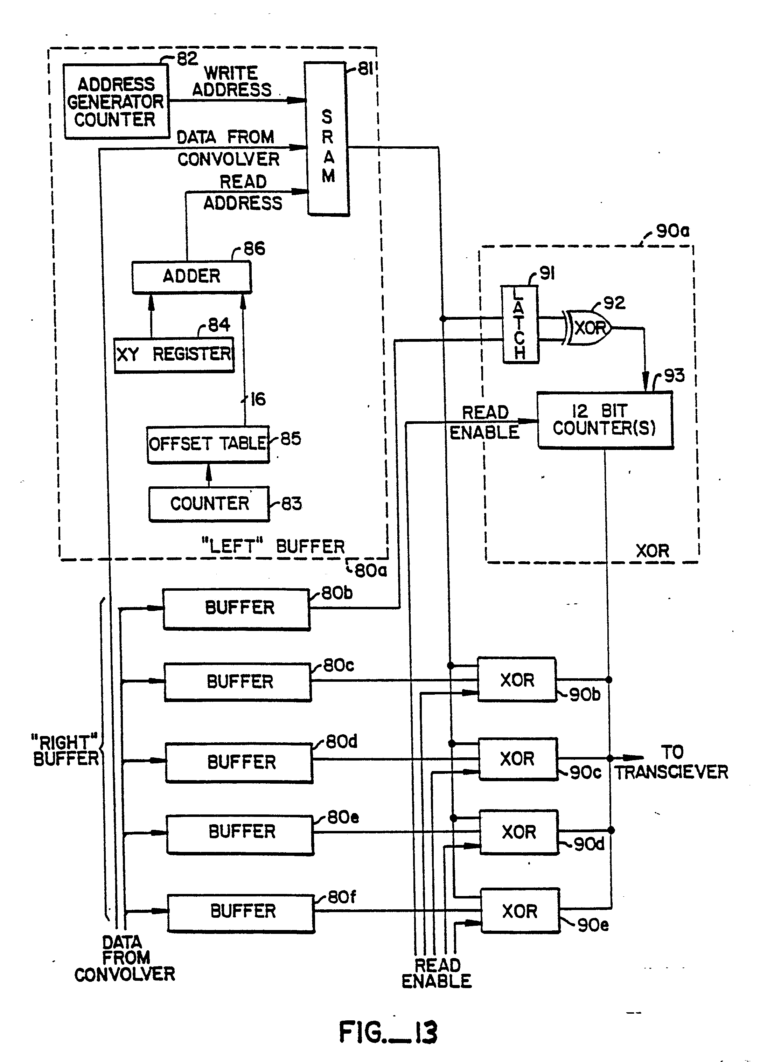

Fig. 13 is a more detailed block diagram of one embodiment of the correlator previously shown in block form in Fig. 7. Generally, the components shown in Fig. 13 are driven by a 10-MHz pixel clock. On the rising edge pixel data is stored into six buffers 80a-80f, while on the falling edge pixel data is read out. In the preferred embodiment the filtered image input data (from Fig. 13) are supplied in parallel to buffers 80a-80f. The contents of buffer 80a are shown in greater detail; similar components make up each of the remaining buffers 80b-80f. Buffer 80a includes a 64k-by-1 bit memory 81 for storing approximately one-quarter of the image. Memory 81 corresponds to either block designated storage in Fig. 7. In the preferred embodiment memory 81 is a static random access memory and stores 256-by-256 pixels of data. The choice of the size of memory 81 is arbitrary, and larger or smaller memories may be employed depending upon the particular application for the correlator. Storage of the convolver output data in memory 81 allows scanning of the contents of the memory for purposes of image correlation.

Address generator counters 82 supply addressing information to the memory 81 to control the location where data from the convolver is stored. The address generator counters typically include a first counter for identifying a unique horizontal line, and a second counter for identifying a pixel position on that line. The addresses from which data in memory 81 are read are controlled ultimately by a counter 83 and an x-y register 84. X-y register 84 provides information regarding the center point of a correlation window on the image. By varying the position of the window's center point, one image may be shifted with respect to the other. Counter 83 counts the number of points in a window to be compared with the other image in other buffers, while offset table 85 provides information regarding the offset within the window of each image point to be compared. Offset table 85 will typically contain about 4,000 points. Data from offset table 85 and from x-y register 84 are combined by an adder 86 to provide read address information for memory 81. The data from the convolver are supplied both to the left buffer 80a and the right buffers 80b-80f. The use of six buffers holding the same convolver data creates a 6-ported memory and allows five values to be generated by the exclusive OR networks 90a-90e during each cycle. The left buffer allows one value to be used for comparison against five locations in the right buffers in parallel. The five right ports allow five symmetric correlations to be carried out centered on five different positions in the image in parallel.

The offsets are provided through a look-up table and index to each point in the correlation window. This allows comparison of any desired set of points in one image with any desired set of points in the transformed image. In the preferred embodiment the left offset table 85a contains offsets to all points in a circular disk centered on (0,0). The points stored in the table are ordered with points closer to the origin (0,0) earlier in the table. This ordering allows the correlation window size to be controlled through the range of table offsets used. For example, entries 0 through 1024 define a disk shaped window with a diameter of approximately 36 pixels. The right offset tables 85b-85f store offset entries that are negatives of the corresponding entries in table 85a. For example, if a particular entry of table 85a contains the point (x,y), then the corresponding particular entry in each of tables 85b-85f contains the two-dimensional offset (-x,-y).

Each of the exclusive OR networks 90a-90e contains a latch 91, an exclusive OR gate 92, and one or more counters depending upon the number of bits of counting desired. Latch 91 holds the output value from the left buffer and one of the right buffers (depending upon which exclusive OR network) and supplies the resulting data to the exclusive OR gate 92. XOR gate 92 drives desired counters to provide as many bits of accuracy as desired. In the preferred embodiment a 12-bit counter 93 is provided by three smaller 4-bit counters. Read enable lines coupled to the counters 93 enable supplying the output from a desired counter to a bus transceiver (not shown).

## D. Experimental Results

The patterns of Figs. 3A and 5A were printed as 3.5 by 3.5 inch textures on paper with a laser printer and placed on a micropositioner stage approximately 7 inches below a Fairchild CCD 5000 camera with a 8.5mm lens. This arrangement resulted in a camera pixel spacing of approximately 20mils horizontally. Fig. 14 shows the results obtained using Equation 15 to estimate peak location as the symmetry center of the target was moved on the micropositioner from one pixel center to the next. The correlation window size in this test was 64 by 64 pixels and the $\nabla^2G$ convolution kernel had a center diameter (w) of 8 pixels. Both the convolution and correlations here were carried out at video rates in hardware as described above, controlled by a 68000 microprocessor.

Peak position accuracy (deviations from linearity) was on the order of 1 mil or better with a pixel spacing of 20 mils for the normal texture of Fig. 3A and on the order of 2 mils or better for the pattern of Fig. 5A. Rotation of the pattern about its symmetry center had no effect on the correlation peak and similarly image size could be changed over several octaves with no noticeable effect on performance.

The plots of Fig. 14 show the linearity of the interpolation formula given by Equation 15 when applied to the camera images of Figs. 3A and 5A respectively. Crosses are for the noise free pattern of Fig. 3A and open circles are for the 25 percent noise pattern of Fig. 5A. Both cases also have noise introduced by the camera and digitizer as well as noise associated with reproducing the texture pattern on paper. The horizontal axis of the plot is the physical position of the pattern under the camera as read from the micrometer on the micropositioner stage supporting the target. The vertical axis is interpolated position computed with Equation 15. The symmetry center of the pattern was centered on a camera pixel at the two end points of the plot.

## E. Extensions and Applications

The above technique provides (x,y) position measurements in camera coordinates of a point reflection symmetry center independent of rotation or scale. Further degrees of freedom can be constrained by adding additional point reflection symmetry centers to the target. This can be accomplished in several ways, for example, by abutting several copies of a pattern like that in Fig. 3A next to each other, or by making a pattern where each quadrant has a point reflection symmetry center at its center as well as a global point reflection symmetry center at the origin. With position measurements from three point reflection symmetry centers in a target, it is possible to constrain six degrees of freedom which can include target location and rotation in camera coordinates as well as three additional parameters with less precision such as distance and surface gradient. The use of additional cameras and targets on other surfaces of the subject can be used to improve precision as well as to extend the range of motion and rotation that can be handled.

The ability to measure the six degrees of freedom, namely, position and orientation in space, of a manipulator could make a significant contribution to high tolerance machine part assembly. At present most approaches rely on the use of manipulators with ultra high absolute positioning abilities-one of the IBM robots has a 1 mil precision over a work space of 6 feet or so. This, however, greatly increases manipulator cost and mass. The availability of high precision measurements of where the end effector is in space could drastically reduce the current reliance on absolute mechanaical precision and bring about a change in the design of robotic systems to emphasize precise relative motion capabilities instead.

New head mounted graphic displays which immerse the user in a three-dimensional display environment require means for measuring head position and orientation accurately. Competing approaches for making these measurements are systems based on the measurement of magnetic fields and inertial systems. The magnetic systems are expensive, sensitive to metal, and noisy. Inertial systems have not been investigated sufficiently, but are probably too expensive to be practical at present. An optical approach based on this invention may provide a good match to the requirements of the problem.

The approach of the present invention fits well with a sign correlation technique that was developed for making wafer overlay accuracy and critical dimension measurements. In that application, random dot targets are placed on successive layers of the wafer and used individually to measure critical dimensions and in pairs to measure registration errors between layers by correlating $\nabla^2 G$ signs. In some cases, it is difficult to find the random dot patterns on each die of the wafer. Mechanical means can be used to locate these positions to an accuracy of about 1/4 the diameter of the random dot patterns, but other means are required to resolve the remaining error.

A simple modification of the random dot targets used in these applications - giving them point reflection symmetry - would allow the above technique to be used to find the targets with a two-dimensional correlation search without requiring a stored template of the dot pattern. This approach also eliminates sensitivity of the correlation to rotation and magnification changes which are problems when stored templates are used. This modification has no effect on the performance of the original critical dimension and overlay error measurement techniques. It is also possible to use the point reflection symmetry center measurements directly to determine the overlay error between a pair of process layers. The invention also allows less precise mechanical positioning mechanisms to be used, possibly resulting in a much less expensive measurement system.

It should be possible to apply this point reflection symmetry technique as a means for defining fiducial positions on a printed circuit board. Point reflection symmetric targets could be found and measured automatically and with high precision even when the board images are badly cluttered by process artifacts.

Conclusion

In conclusion, it can be seen that the present invention provides an efficient and sensitive technique for determining target positions. Key to the idea is the use of a symmetry that allows a correlation template to be constructed from the target image, thus making it possible to avoid dependence on undesired image transformations such as scale or rotation.

While the above is a complete description of a preferred embodiment, alternative constructions, modifications, and equivalents can be used. For example, other symmetries such as reflection about the x or y axes can also be used, but in such a case, only the one-dimensional position of the image symmetry axis can be determined. Additionally, other correlation techniques such as intensity correlation can be used in place of the binarized Laplacian of Gaussian correlation. Therefore, the above description and illustrations should not be taken as limiting the scope of the invention which is defined by the appended claims.

**Claims**

1. A method for locating a target image in an image plane comprising the steps of:
providing a target having a particular symmetry such that the target is invariant under a particular symmetry transformation;
projecting the target onto the image plane to define a target image;
performing a correlation operation between the target image and a version thereof that has been subjected to the symmetry transformation.

2. The method of claim 1, and further comprising the step, carried out before said step of performing a correlation operation, of filtering the target image to remove at least some higher spatial frequencies while leaving at least some lower spatial frequencies in the target image.

3. The method of claim 2 wherein said filtering step includes as well high pass filtering;

4. The method of claim 3 wherein said filtering step comprises applying a Laplacian operator and a Gaussian convolution to the target image.

5. The method of claim 4 wherein said correlation operation is carried out on images having binary values corresponding to the sign of the convolution values.

6. The method of claim 1 wherein the particular symmetry is a symmetry about a symmetry point on the target.

7. The method of claim 6 wherein the symmetry is point reflection symmetry.

8. The method of claim 1 wherein the target comprises a random dot pattern having the particular symmetry.

9. A method for locating a target image in an image plane comprising the steps of:

providing a random dot pattern having a point reflection symmetry through a symmetry point on the target;

projecting the target unto the image plane to define a target image having an image symmetry point;

subjecting the target image to a binarized Laplacian of Gaussian convolution to provide a filtered target image; and

correlating the filtered target image and a point reflected version thereof to determine a point of maximum correlation, which corresponds to the location of the image symmetry point.

FIG. 1

FIG. 2A

FIG. 3A

FIG. 3B

FIG. 2B

FIG. 4

FIG. 5A

FIG. 5B

FIG. 6

FIG. 14

FIG__ 7

FIG.__ 8

FIG._ 9

FIG._10

OUTPUT VIDEO RASTER OF
INPUT CONVOLVED
WITH 7n x 7n GAUSSIAN

FIG.__11

FIG.__12

FIG.__13